(19) Europäisches Patentamt
European Patent Office
Office européen des brevets

(11) **EP 4 475 209 A1**

(12) **EUROPEAN PATENT APPLICATION**

(43) Date of publication:
**11.12.2024 Bulletin 2024/50**

(21) Application number: **24178869.4**

(22) Date of filing: **29.05.2024**

(51) International Patent Classification (IPC):
**H01M 4/131** (2010.01)     **H01M 4/525** (2010.01)
**H01M 4/62** (2006.01)     **H01M 10/0525** (2010.01)

(52) Cooperative Patent Classification (CPC):
**H01M 4/131; H01M 4/525; H01M 4/625;
H01M 10/0525**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.06.2023  KR 20230073478
11.12.2023  KR 20230178859**

(71) Applicants:
• **Samsung SDI Co., Ltd.
Yongin-si, Gyeonggi-do 17084 (KR)**
• **IUCF-HYU (INDUSTRY-UNIVERSITY
COOPERATION
FOUNDATION HANYANG UNIVERSITY)
Seoul 04763 (KR)**

(72) Inventors:
• **LEE, Jinhyon
17084 Yongin-si (KR)**
• **PAIK, Ungyu
06289 Seoul (KR)**
• **SONG, Taeseup
03180 Seoul (KR)**
• **LEE, Hyungjun
04762 Seoul (KR)**
• **KIM, Jiwoon
02858 Seoul (KR)**

(74) Representative: **Marks & Clerk LLP
15 Fetter Lane
London EC4A 1BW (GB)**

(54) **ELECTRODE FOR RECHARGEABLE LITHIUM BATTERY AND RECHARGEABLE LITHIUM BATTERY INCLUDING THE SAME**

(57)     Provided are an electrode for a rechargeable lithium battery and a rechargeable lithium battery including the same. The electrode includes a current collector; and an electrode active material layer on the current collector and including an active material, a first conductive material, and a binder, wherein the first conductive material includes a core including graphene, graphene oxide, reduced graphene oxide, or a combination thereof; and a coating layer on a surface of the core and including alumina nanoparticles.

FIG. 2

1μm

EP 4 475 209 A1

**Description**

**BACKGROUND**

**1. Field**

Electrodes for rechargeable lithium batteries and rechargeable lithium batteries including the same are disclosed.

**2. Description of the Related Art**

With the industrial development of medium-to-large rechargeable batteries for electric vehicles, interest in rechargeable lithium batteries having high energy density is emerging.

As a strategy to improve energy density of rechargeable lithium batteries, thick film electrodes may be applied. However, if a wet process is applied to manufacture the electrodes, microstructures thereof are deteriorated according to binder migration in a subsequent drying process, which may limit or reduce thickening of the electrodes. In this regard, a method of manufacturing the electrodes by adopting a dry process has been proposed, and this dry process technology has features of being low-cost and eco-friendly in addition to easily thickening the electrodes.

However, this dry process mainly uses polytetrafluoroethylene (PTFE) as an electrode binder, which has high electrical resistance and ion resistance. Accordingly, compared with the electrodes manufactured in the wet process, the electrodes manufactured in the dry process have the disadvantage of high resistance.

After manufacturing the electrodes in the dry process, a subsequent process of making the electrodes into films is utilized for securing properties (e.g., tensile strength, ductility, etc.) of the electrode films. Accordingly, it would be beneficial to introduce a conductive material (e.g., an electrically and/or ionically conductive material) capable of improving the properties of the electrode films and lowering the resistance of the electrode films thereinto, but little research has been conducted yet thereon.

**SUMMARY**

Some embodiments of the present disclosure provide an electrode for a rechargeable lithium battery, including a conductive material (e.g., an electrically and/or ionically conductive material) that can improve physical properties and lower a resistance (e.g., an electrical and/or ionic resistance) of an electrode film manufactured through a dry process.

Some embodiments provide a rechargeable lithium battery including the electrode.

Some embodiments provide an electrode for a rechargeable lithium battery including a current collector; and an electrode active material layer on the current collector and including an active material, a first conductive material (e.g., a first electrically and/or ionically conductive material), and a binder, wherein the first conductive material includes a core including graphene, graphene oxide, reduced graphene oxide, or a combination thereof; and a coating layer on a surface of the core and including alumina nanoparticles.

At least some of the above and other features of the invention are set out in the claims.

The electrode according to some embodiments can improve physical properties of the electrode and exhibit low resistance even if it is manufactured through a dry process.

**BRIEF DESCRIPTION OF THE DRAWINGS**

The accompanying drawings, together with the specification, illustrate embodiments of the subject matter of the present disclosure, and, together with the description, serve to explain principles of embodiments of the subject matter of the present disclosure.

FIG. 1 is a schematic perspective view showing a rechargeable lithium battery according to some embodiments.
FIG. 2 is an image of the surface of the first conductive material observed using scanning electron microscope (SEM) equipment in an example.
FIG. 3 is an image showing energy dispersive X-ray spectroscopy (EDS) mapping analysis of the surface of a first conductive material in an example.
FIG. 4 is a graph showing the results of measuring tensile strengths and elongation rates in a vertical direction of the electrode in some embodiments.
FIG. 5 is a graph showing the results of measuring tensile strengths and elongation rates in a horizontal direction of the electrode in some embodiments.
FIG. 6 is a graph showing charge/discharge behavior measured at each C-rate of 0.1 C and 1 C for the rechargeable lithium battery cells according to examples.

FIG. 7 is a graph showing charge/discharge behavior measured at each C-rate of 2 C for rechargeable lithium battery cells according to examples.

FIG. 8 is a graph showing $R_{ion}$ for the rechargeable lithium battery cells according to examples.

FIG. 9 is a graph showing $R_{ct}$ for a rechargeable lithium cells according to examples.

## DETAILED DESCRIPTION

Hereinafter, embodiments of the present disclosure will be described in more detail. However, these embodiments are examples, the present disclosure is not limited thereto and the present disclosure is defined by the scope of the appended claims and equivalents thereof.

As used herein, if a specific definition is not otherwise provided, it will be understood that if an element such as a layer, film, region, or substrate is referred to as being "on" another element, it can be directly on the other element or intervening elements may also be present.

As used herein, if a specific definition is not otherwise provided, the singular may also include the plural. In embodiments, unless otherwise specified, "A or B" may mean "including A, including B, or including A and B."

As used herein, "combination thereof" may mean a mixture, a stack, a composite, a copolymer, an alloy, a blend, and a reaction product of constituents.

As used herein, if a definition is not otherwise provided, a particle diameter may be an average particle diameter. The average particle diameter may be an average particle diameter ($D_{50}$), which is a diameter of particles with a cumulative volume of 50 volume% in the particle size distribution. The average particle diameter ($D_{50}$) can be measured by any suitable methods generally used in the art, for example, by measuring with a particle size analyzer, a transmission electron microscope, and/or a scanning electron microscope, or a scanning electron microscope. In embodiments, a dynamic light-scattering measurement device may be used to perform a data analysis, and the number of particles may be counted for each particle size range. From this, the average particle diameter ($D_{50}$) value may be easily obtained through a calculation. A laser diffraction method may be used. If measuring by laser diffraction, for example, the particles to be measured are dispersed in a dispersion medium and then introduced into a commercially available laser diffraction particle size measuring device (e.g., MT 3000 available from Microtrac, Ltd.) using ultrasonic waves at about 28 kHz, and after irradiation with an output of 60 W, the average particle diameter ($D_{50}$) based on 50% of the particle size distribution in the measuring device can be calculated.

### Electrode

Some embodiments provide an electrode for a rechargeable lithium battery including a current collector; and an electrode active material layer on the current collector and including an active material, a first conductive material (e.g., a first electrically and/or ionically conductive material), and a binder, wherein the first conductive material includes a core including graphene, graphene oxide, reduced graphene oxide, or a combination thereof; and a coating layer on a surface of the core and including alumina nanoparticles.

Thickening of the electrode to secure high energy density, which increases electrical conduction and ion transport paths in the electrode, may increase overall resistance (e.g., electrical and/or ionic resistance) in the electrode and deteriorate electrochemical characteristics (e.g.: tensile strength, ductility, etc.) of the electrode film.

In this regard, some methods of improving (i.e. lowering) resistance of electrodes manufactured in a wet process have been reported, but almost no methods of improving resistance (e.g., electrical and/or ionic resistance) of electrodes manufactured in a dry process have been reported.

Some embodiments, while adopting the dry process to manufacture electrodes, introduce a first conductive material (e.g., a first electrically and/or ionically conductive material) capable of improving properties of the electrode films and lowering resistance (e.g., electrical and/or ionic resistance) thereinto.

The first conductive material includes a core including graphene, graphene oxide, reduced graphene oxide, or a combination thereof; and a coating layer on a surface of the core and including alumina nanoparticles.

The graphene, graphene oxide, and reduced graphene oxide that constitutes the core of the first conductive material are materials having low resistance, high electrical conductivity, and excellent properties (tensile strength, elongation rate, etc.). Accordingly, a dry electrode incorporating the graphene, graphene oxide, reduced graphene oxide, or a combination thereof as the core of the first conductive material may offset high electrical resistance of a binder and secure high electrical conductivity and excellent properties.

In embodiments, the graphene, graphene oxide, and reduced graphene are materials having a two dimensional (2D) nanoplate shape, which have a larger specific surface area than materials having a 0D shape such as carbon black and/or the like. Accordingly, the first conductive material into whose core the graphene, graphene oxide, reduced graphene oxide, or a combination thereof are introduced may be discontinuously present in the form of surrounding the dry binder but not block the surface of an active material, thereby maintaining a pore structure inside the electrode.

In embodiments, the first alumina nanoparticles may control surface characteristics of the core to develop the micropore structure inside the electrode and are lithophilic to improve ionic conductivity around the core.

In the electrode of some embodiments, into which the first conductive material is introduced, compared with an electrode using carbon black alone as a conductive material, even if manufactured in the dry process, may exhibit improved properties and low resistance (e.g., low electrical and/or ionic resistance).

Hereinafter, the electrode of some embodiments will be described in more detail.

Based on 100 parts by weight of the core, the coating layer may be included in an amount of about 1 to about 100 parts by weight, about 5 to about 80 parts by weight, or about 10 to about 50 parts by weight.

Within the above ranges, as the content of the coating layer decreases, the resistivity (e.g., electrical and/or ionic resistivity) of the surface of the positive electrode active material layer decreases, and charge/discharge behavior can be improved.

The coating layer may be in a form of dots. In embodiments, it may be beneficial to develop a fine pore structure within the electrode compared to a uniformly (or substantially uniformly) coated form.

The alumina nanoparticles may have a $D_{50}$ particle size of about 10 to about 100 nm, about 20 to about 90 nm, or about 30 to about 60 nm.

Within the above ranges, the alumina nanoparticles can be efficiently coated on the surface of the core.

The electrode active material layer may include the first conductive material as a sole conductive material (e.g., the only electrically and/or ionically conductive material or additive in the electrode active material layer), or may further include a second conductive material (e.g., a second electrically and/or ionically conductive material). The second conductive material may include carbon black.

In embodiments, a weight ratio of the first conductive material and the second conductive material may be about 1:9 to about 9:1, about 1:7 to about 7:1, about 1:5 to about 5:1, or about 1:3 to about 3:1.

Because the carbon black is a 0D shaped material, it may be suitable or desirable to develop or provide a fine pore structure within the electrode if combined with the first conductive material having a 2D nanoplate shape.

The binder may be a dry binder.

The dry binder may be a polymer material capable of being fiberized, and may be, for example, polytetrafluoroethylene, polyvinylidene fluoride, a polyvinylidene fluoride-hexafluoropropylene copolymer, polyethylene oxide, or a combination thereof.

For example, the binder may be polytetrafluoroethylene.

In embodiments, the electrode may be a positive electrode, and the active material may be a positive electrode active material.

In embodiments, the positive active material may include a lithium nickel-based oxide.

## Positive Electrode Active Material

The positive electrode active material may be a compound (lithiated intercalation compound) capable of intercalating and deintercalating lithium. For example, one or more types (or kinds) of composite oxides of lithium and a metal selected from cobalt, manganese, nickel, and a combination thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, the positive electrode active material may be a high nickel-based positive electrode active material having a nickel content of greater than or equal to about 80 mol% based on 100 mol% of metals excluding lithium in the lithium transition metal composite oxide. The nickel content in the high nickel-based positive electrode active material may be greater than or equal to about 85 mol%, greater than or equal to about 90 mol%, greater than or equal to about 91 mol%, or greater than or equal to about 94 mol% and less than or equal to about 99 mol% based on 100 mol% of metals excluding lithium in the lithium transition metal composite oxide. The high nickel-based positive electrode active materials can achieve high capacity and can be applied to high-capacity, high-density rechargeable lithium batteries.

As an example, a compound represented by any of the following chemical formulas can be used. $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); and $Li_aFePO_4$ ($0.90 \leq a \leq 1.8$)

In the above chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; Q is Ti, Mo, Mn, or a combination thereof; Z is Cr, V, Fe, Sc, Y, or a combination thereof; and $L^1$ is Mn, Al, or a combination thereof.

**Positive Electrode**

The positive electrode for a rechargeable lithium battery may include a current collector and a positive electrode active material layer on the current collector. The positive electrode active material layer includes a positive electrode active material and may further include a binder and/or a conductive material (e.g., an electrically and/or ionically conductive material).

A content of the positive electrode active material may be about 90 wt% to about 99.5 wt% based on 100 wt% of the positive electrode active material layer.

In some embodiments, the positive active material layer may further include a binder and a conductive material (e.g., an electrically and/or ionically conductive material). At this time, a content of the binder and the conductive material may be about 0.5 wt% to about 5 wt%, respectively, based on 100 wt% of the positive electrode active material layer.

The binder serves to attach the positive electrode active material particles well to each other and also to attach the positive electrode active material well to the current collector. Examples of the binder may be polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and a combination thereof, but are not limited thereto.

The conductive material may be used to impart conductivity (e.g., electrical conductivity) to the electrode and any suitable material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, carbon nanotube, and graphene; a metal-based material including copper, nickel, aluminium, silver, etc., in a form of a metal powder and/or a metal fiber; a conductive polymer (e.g., an electrically conductive polymer) such as a polyphenylene derivative; or a mixture thereof.

The current collector may include Al, but is not limited thereto.

**Rechargeable Lithium Battery**

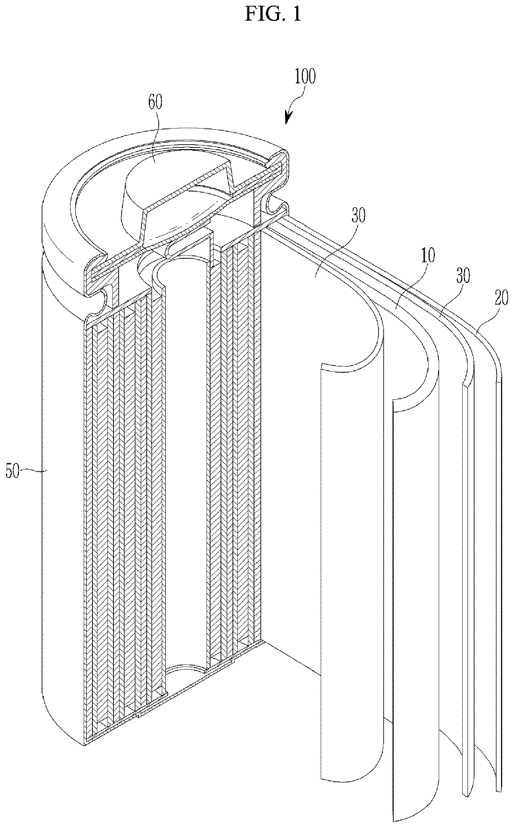

The rechargeable lithium battery according to some embodiments may be classified into cylindrical, prismatic, pouch, or coin-type batteries, and/or the like depending on its shape. FIG. 1 is a schematic perspective view showing a rechargeable lithium battery according to some embodiments. Referring to FIG. 1, the rechargeable lithium battery 100 may include an electrode assembly including a separator 30 between a positive electrode 10 and a negative electrode 20, and a case 50 in which the electrode assembly is housed. The positive electrode 10, the negative electrode 20, and the separator 30 may be impregnated with an electrolyte solution. The rechargeable lithium battery 100 may include a sealing member 60 that seals the case 50 as shown in FIG. 1.

The rechargeable lithium battery according to some embodiments may include the aforementioned electrode.

Hereinafter, descriptions that overlap with the above will not be repeated, and a rechargeable lithium battery of some embodiments will be described in more detail.

**Negative Electrode Active Material**

The negative electrode active material may be a material that reversibly intercalates/deintercalates lithium ions, a lithium metal, a lithium metal alloy, a material capable of doping and dedoping lithium, and/or a transition metal oxide.

The material that reversibly intercalates/deintercalates lithium ions may include a carbon-based negative electrode active material, for example, crystalline carbon, amorphous carbon, or a combination thereof. The crystalline carbon may be graphite such as irregular-shaped, sheet-shaped, flake-shaped, sphere-shaped, and/or fiber-shaped natural graphite and/or artificial graphite. The amorphous carbon may be a soft carbon, a hard carbon, a mesophase pitch carbonization product, calcined coke, and/or the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, $SiO_x$ (0 < x < 2), a Si-Q alloy (wherein Q is selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may include Sn, $SnO_2$, a Sn alloy, or a combination thereof.

The silicon-carbon composite may be a composite of silicon and amorphous carbon. An average particle diameter ($D_{50}$) of the silicon-carbon composite particle may be, for example, about 0.5 $\mu$m to about 20 $\mu$m. According to some embodiments, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core. The crystalline carbon may be artificial graphite, natural graphite, or a combination thereof. The amorphous carbon may include soft carbon and/or hard carbon, mesophase pitch carbonized product, calcined coke, and/or the like.

If the silicon-carbon composite includes silicon and amorphous carbon, a content of silicon may be about 10 wt% to about 50 wt% and a content of amorphous carbon may be about 50 wt% to about 90 wt% based on 100 wt% of the silicon-carbon composite. In embodiments, if the composite includes silicon, amorphous carbon, and crystalline carbon, a content of silicon may be about 10 wt% to about 50 wt%, a content of crystalline carbon may be about 10 wt% to about 70 wt%, and a content of amorphous carbon may be about 20 wt% to about 40 wt% based on 100 wt% of the silicon-carbon composite.

In embodiments, a thickness of the amorphous carbon coating layer may be about 5 nm to about 100 nm. An average particle diameter ($D_{50}$) of the silicon particles (primary particles) may be about 10 nm to about 1 $\mu$m, or about 10 nm to about 200 nm. The silicon particles may exist as silicon alone, in the form of a silicon alloy, and/or in an oxidized form. The oxidized form of silicon may be represented by $SiO_x$ (0<x<2). At this time, the atomic content ratio of Si:O, which indicates a degree of oxidation, may be about 99:1 to about 33:67. As used herein, if a definition is not otherwise provided, an average particle diameter ($D_{50}$) indicates a particle where an accumulated volume is about 50 volume% in a particle distribution.

The Si-based negative electrode active material and/or the Sn-based negative electrode active material may be used in combination with a carbon-based negative electrode active material. If the Si-based negative electrode active material and/or Sn-based negative electrode active material and the carbon-based negative electrode active material are mixed together and used, the mixing ratio may be a weight ratio of about 1:99 to about 90:10.

**Negative Electrode**

The negative electrode for a rechargeable lithium battery includes a current collector and a negative electrode active material layer on the current collector. The negative electrode active material layer includes a negative electrode active material and may further include a binder and/or a conductive material (e.g., an electrically and/or ionically conductive material).

A content of the negative electrode active material may be about 95 wt% to about 99.5 wt% based on 100 wt% of the negative electrode active material layer. A content of the binder may be about 0.5 wt% to about 5 wt% based on 100 wt% of the negative electrode active material layer. A content of the binder may be about 0.5 wt% to about 5 wt% based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

The binder may serve to attach the negative electrode active material particles well to each other and also to attach the negative electrode active material well to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If an aqueous binder is used as the negative electrode binder, it may further include a cellulose-based compound capable of imparting or increasing viscosity. The cellulose-based compound includes one or more of carboxylmethyl cellulose, hydroxypropylmethyl cellulose, methyl cellulose, and/or alkali metal salts thereof. The alkali metal may be Na, K, and/or Li.

The dry binder may be a polymer material capable of being fiberized, and may be, for example, polytetrafluoroethylene, polyvinylidene fluoride, polyvinylidene fluoride-hexafluoropropylene copolymer, polyethylene oxide, or a combination thereof.

The conductive material is included to provide electrode conductivity (e.g., electrical conductivity), and any suitable electrically conductive material may be used as a conductive material unless it causes a chemical change (e.g., an undesirable chemical change in the rechargeable lithium battery). Examples of the conductive material may be a carbon-based material such as natural graphite, artificial graphite, carbon black, acetylene black, ketjen black, a carbon fiber, a carbon nanofiber, a carbon nanotube, graphene, and the like; a metal-based material such as copper, nickel, aluminium, silver, and the like in a form of a metal powder and/or a metal fiber; a conductive polymer (e.g., an electrically conductive polymer) such as a polyphenylene derivative; or a mixture thereof.

The negative electrode current collector may include one selected from a copper foil, a nickel foil, a stainless steel foil, a titanium foil, a nickel foam, a copper foam, a polymer substrate coated with a conductive metal (e.g., an electrically conductive metal), and a combination thereof, but is not limited thereto.

**Electrolyte Solution**

The electrolyte solution for a rechargeable lithium battery includes a non-aqueous organic solvent and a lithium salt.

The non-aqueous organic solvent serves as a medium that transmits ions taking part in the electrochemical reaction of a battery.

The non-aqueous organic solvent may be a carbonate-based, ester-based, ether-based, ketone-based, alcohol-based solvent, aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, methylpropionate, ethylpropionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone. The alcohol-based solvent may include ethyl alcohol, isopropyl alcohol, and/or the like, and the aprotic solvent may include nitriles such as R-CN (wherein R is a C2 to C20 linear, branched, or cyclic hydrocarbon group, a double bond, an aromatic ring, or an ether group), amides such as dimethylformamide, dioxolanes such as 1,3-dioxolane or 1,4-dioxolane, sulfolanes, and/or the like.

The non-aqueous organic solvent may be used alone or in a mixture of two or more types (or kinds), and if two or more types (or kinds) are used in a mixture, a mixing ratio can be suitably or appropriately adjusted according to a suitable or desired battery performance.

Additionally, if using a carbonate-based solvent, cyclic carbonate and chain carbonate can be mixed together and used, and cyclic carbonate and chain carbonate can be mixed together at a volume ratio of about 1:1 to about 1:9.

The non-aqueous organic solvent may further include an aromatic hydrocarbon-based organic solvent. For example, the carbonate-based solvent and the aromatic hydrocarbon-based organic solvent may be mixed together and used in a volume ratio of about 1:1 to about 30:1.

The electrolyte solution may further include vinylethylene carbonate, vinylene carbonate, and/or ethylene carbonate-based compounds in order to improve cycle-life of a battery.

Examples of the ethylene carbonate-based compounds may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of a lithium salt may include one or more than one selected from $LiPF_6$, $LiBF_4$, $LiSbF_6$, $LiAsF_6$, $LiClO_4$, $LiAlO_2$, $LiAlCl_4$, $LiPO_2F_2$, $LiCl$, $Lil$, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (x and y are integers from 1 to 20), lithium trifluoromethane sulfonate, lithium tetrafluoroethanesulfonate, lithium difluorobis(oxalato)phosphate, (LiDFOB), and lithium bis(oxalato)borate (LiBOB).

A concentration of lithium salt may be within a range of about 0.1 M to about 2.0 M. If the concentration of lithium salt is within the above range, the electrolyte has suitable or appropriate ionic conductivity and viscosity, and thus excellent performance can be achieved and lithium ions can move effectively.

**Separator**

The rechargeable lithium battery may further include a separator between the negative electrode and the positive electrode, depending on a kind of the battery. Examples of a suitable separator material include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The separator may include a porous substrate and a coating layer including an organic material, an inorganic material, or a combination thereof on one or both surfaces of the porous substrate.

The porous substrate may be a polymer film formed of any one selected from a polymer, or a copolymer or mixture of two or more of polyolefin such as polyethylene and/or polypropylene, a polyester such as polyethyleneterephthalate, and/or polybutyleneterephthalate, polyacetal, polyamide, polyimide, polycarbonate, polyether ketone, polyaryl ether ketone, polyether imide, polyamideimide, polybenzimidazole, polyether sulfone, polyphenylene oxide, a cyclic olefin copolymer, polyphenylene sulfide, polyethylene naphthalate, a glass fiber, TEFLON (tetrafluoroethylene), and/or polytetrafluoroethylene.

The porous substrate may have a thickness of about 1 $\mu$m to about 40 $\mu$m, for example, about 1 $\mu$m to about 30 $\mu$m, about 1 $\mu$m to about 20 $\mu$m, about 5 $\mu$m to about 15 $\mu$m, or about 10 $\mu$m to about 15 $\mu$m.

The organic material may include a (meth)acryl-based copolymer including a first structural unit derived from (meth)acrylamide, and a second structural unit including at least one selected from a structural unit derived from (meth)acrylic acid or (meth)acrylate, and a structural unit derived from (meth)acrylamidosulfonic acid or a salt thereof.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, SrTiOs, BaTiOs, $Mg(OH)_2$, boehmite, and a combination thereof, but is not limited thereto. An average particle diameter ($D_{50}$) of the inorganic particles may be about 1 nm to about 2000 nm, for example, about 100 nm to about 1000 nm, or about 100 nm to about 700 nm.

The organic material and the inorganic material may be mixed together in one coating layer, or a coating layer including an organic material and a coating layer including an inorganic material may be stacked.

The thickness of the coating layer may be about 0.5 $\mu$m to about 20 $\mu$m, for example, about 1 $\mu$m to about 10 $\mu$m, or about 1 $\mu$m to about 5 $\mu$m.

Hereinafter, the above aspects of embodiments of the present disclosure are illustrated in more detail with reference to examples. However, these are merely examples, and the present disclosure is not limited thereto.

**Example 1**

**(1) Preparation of First Conductive Material**

A graphene oxide (GO) solution (a solvent: distilled water) including GO at a concentration of 2.0 wt% was diluted by adding distilled water thereto, and $Al_2O_3$ nano particles ($D_{50}$: 50 nm) were added to the diluted GO solution. Herein, the $Al_2O_3$ nano particles were used in an amount of 10 parts by weight based on 100 parts by weight of the solid (GO) in the diluted GO solution.

Subsequently, a hydrothermal synthesis method was utilized to convert the graphene oxide (GO) into reduced graphene oxide (rGO) and coat the alumina nanoparticles in the form of dots on the surface of the reduced graphene oxide (rGO). Accordingly, a first conductive material including the reduced graphene oxide (rGO) as a core and an alumina nanoparticles coating layer in the form of dots on the surface of the core was obtained.

**(2) Manufacture of Positive Electrode**

2.0 wt% of the first conductive material was mixed together with 92.0 wt% of NCA ($LiNi_{0.8}Co_{0.15}Al_{0.05}O_2$) as a positive electrode active material, 4.0 wt% of polytetrafluoroethylene (PTFE) as a binder, and 2.0 wt% of carbon black (CB) as a second conductive material.

The positive electrode active material, the binder, and the second conductive material were first dry-mixed with a blade mixer at 1000 rpm for 5 minutes, and the first conductive material was added thereto and then, dry-mixed again for 5 minutes. Subsequently, as the binder was fiberized, the mixture was additionally dry-mixed at 5000 rpm for 20 minutes. Herein, no solvent was used in preparing the mixture.

The prepared mixture was put into an extruder and extruded into a self-standing film of a positive electrode active material layer in the form of a sheet, and this self-standing film was adhered onto a current collector coated with carbon. A dry positive electrode manufactured in this way was referred to as an AG-cathode 1.

In the AG-cathode 1, the positive electrode active material layer had a loading level of 49.4 mg/cm$^2$ and mixture density of 3.6 g/cc, and in the positive electrode active material layer, the first conductive material had a loading amount

of 444.6 $\mu$g/cm$^2$, and the second conductive material had a loading amount of 444.6 $\mu$g/cm$^2$.

**(3) Manufacture of Rechargeable Lithium Battery Cell (coin half-cell)**

The positive electrode was used with a lithium metal counter electrode to manufacture a coin half-cell. Between the positive electrode and the lithium metal counter electrode, a separator made of a porous polyethylene film (a thickness: about 16 $\mu$m) was provided, and an electrolyte solution was implanted thereinto. The electrolyte solution was prepared by mixing together ethylene carbonate (EC) and ethylmethyl carbonate (EMC) in a volume ratio of 3:5 and dissolving 1.1 M LiPF$_6$ in the mixed solvent.

**(4) Manufacture of Rechargeable Lithium Battery Cell (Symmetric Cell)**

The two positive electrodes were assembled with a separator made of a porous polyethylene film (a thickness: about 16 $\mu$m) therebetween into a symmetric pouch cell, and then, an electrolyte solution was injected thereinto. The electrolyte solution was prepared by mixing together ethylene carbonate (EC) and ethylmethyl carbonate (EMC) in a volume ratio of 3:5 and dissolving 1.1 M LiPF$_6$ therein.

**Example 2**

The Al$_2$O$_3$ nano particles were used in an amount of 25 parts by weight based on 100 parts by weight of the solid (GO) of the graphene oxide solution.
Except for this, a first conductive material, a positive electrode, and a rechargeable lithium battery cell were manufactured in the same manner as in Example 1. The dry positive electrode manufactured in this way was referred to as an AG-cathode 2.
In the AG-cathode 2, a positive electrode active material layer had a loading level of 49.4 mg/cm$^2$ and mixture density of 3.6 g/cc, and in the positive electrode active material layer, the first conductive material had a loading amount of 444.6 $\mu$g/cm$^2$, and a second conductive material had a loading amount of 444.6 $\mu$g/cm$^2$

**Example 3**

The Al$_2$O$_3$ nano particles were used in an amount of 50 parts by weight based on 100 parts by weight of the solid (GO) of the graphene oxide solution.
Except for this, a first conductive material, a positive electrode, and a rechargeable lithium battery cell were manufactured in the same manner as in Example 1. The dry positive electrode manufactured in this way was referred to as an AG-cathode 3.
In the AG-cathode 3, a positive electrode active material layer had a loading level of 49.4 mg/cm$^2$ and mixture density of 3.6 g/cc, and in the positive electrode active material layer, the first conductive material had a loading amount of 444.6 $\mu$g/cm$^2$, and a second conductive material had a loading amount of 444.6 $\mu$g/cm$^2$

**Example 4**

A first conductive material was prepared in the same manner as in Example 1.
Subsequently, 1.0 wt% of the first conductive material was mixed together with 92 wt% of LiNi$_{0.8}$Co$_{0.15}$Al$_{0.05}$O$_2$ as a positive electrode active material, 4 wt% of polytetrafluoroethylene (PTFE) as a binder, and 3.0 wt% of carbon black (CB) as a second conductive material.
Except for this, a positive electrode and a rechargeable lithium battery cell were manufactured in the same manner as in Example 1. The dry positive electrode manufactured in this way was referred to as an AG-cathode 4.
In the AG-cathode 4, a positive electrode active material layer had a loading level of 49.4 mg/cm$^2$ and mixture density of 3.6 g/cc, and in the positive electrode active material layer, the first conductive material had a loading amount of 222.3 $\mu$g/cm$^2$, and a second conductive material had a loading amount of 666.9 $\mu$g/cm$^2$.

**Example 5**

A first conductive material was prepared in the same manner as in Example 1.
Subsequently, 3.0 wt% of the first conductive material was mixed together with 92 wt% of LiNi$_{0.8}$Co$_{0.15}$Al$_{0.05}$O$_2$ as a positive electrode active material, 4 wt% of polytetrafluoroethylene (PTFE) as a binder, and 1.0 wt% of carbon black (CB) as a second conductive material
Except for this, a positive electrode and a rechargeable lithium battery cell were manufactured in the same manner as in Example 1. The dry positive electrode manufactured in this way was referred to as an AG-cathode 5.

In the AG-cathode 5, a positive electrode active material layer had a loading level of 49.4 mg/cm$^2$ and mixture density of 3.6 g/cc, and in the positive electrode active material layer, the first conductive material had a loading amount of 666.9 $\mu$g/cm$^2$, and a second conductive material had a loading amount of 222.3 $\mu$g/cm$^2$

**Comparative Example 1**

92 wt% of LiNi$_{0.8}$Co$_{0.15}$Al$_{0.05}$O$_2$ as a positive electrode active material, 4 wt% of polytetrafluoroethylene (PTFE) as a binder, and 4.0 wt% of carbon black (CB) as a second conductive material were dry-mixed together by using a blade mixer for 10 minutes (5.0 minutes x 2) and then, as the binder was fiberized, additionally dry-mixed together at 5000 rpm for 20 minutes.

Except for this, a dry positive electrode was manufactured in the same manner as in Example 1. The dry positive electrode manufactured in this way was referred to as a P-cathode.

In the P-cathode, a positive electrode active material layer had a loading level of 49.4 mg/cm$^2$ and mixture density of 3.6 g/cc, and in the positive electrode active material layer, a second conductive material had a loading amount of 889.2 $\mu$g/cm$^2$ or so.

Except for using the P-cathode, a rechargeable lithium battery cell was manufactured in the same manner as in Example 1.

**Comparative Example 2**

92 wt% of LiNi$_{0.8}$Co$_{0.15}$Al$_{0.05}$O$_2$ as a positive electrode active material, 4 wt% of polytetrafluoroethylene (PTFE) as a binder, 2.0 wt% of carbon black (CB) as a second conductive material, and 2.0 wt% of graphene as a third conductive material were mixed together.

After dry-mixing together the positive electrode active material, the binder, and the second conductive material by using a blade mixer at 1000 rpm for 5 minutes, the third conductive material was added thereto and then, dry-mixed together again for 5 minutes. Subsequently, as the binder was fiberized, the mixture was additionally dry-mixed together at 5000 rpm for 20 minutes.

Except for this, a dry positive electrode was manufactured in the same manner as in Example 1. The dry positive electrode manufactured in this way was referred to as a G-cathode.

In the G-cathode, a positive electrode active material layer had a loading level of 49.4 mg/cm$^2$ and mixture density of 3.6 g/cc, and in the positive electrode active material layer, the second conductive material had a loading amount of 444.6 $\mu$g/cm$^2$, and the third conductive material had a loading amount of 444.6 $\mu$g/cm$^2$

Except for using the G-cathode, a rechargeable lithium battery cell was manufactured in the same manner as in Example 1.

**Evaluation Example 1: Observation of First Conductive Material**

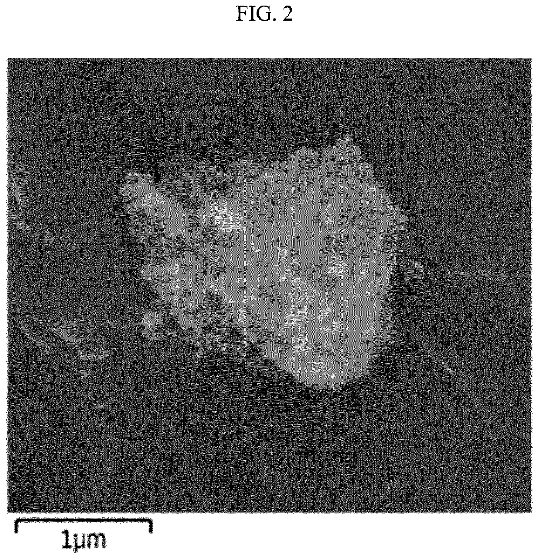

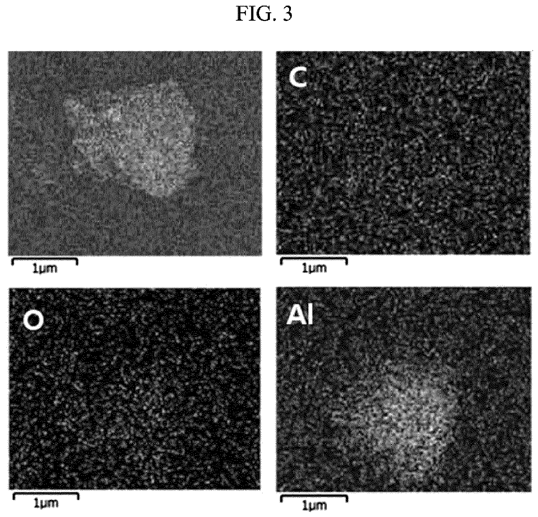

The surface of the first conductive material of Example 1 was examined with scanning electron microscope (SEM) equipment (FIG. 2), and energy dispersive X-ray spectroscopy (EDS) mapping was analyzed by using Quantum 2000 (Physical Electronics) (FIG. 3).

Referring to FIGS. 2-3, the alumina nanoparticles were coated in the form of dots on the surface of the reduced graphene oxide.

**Evaluation Example 2: Mechanical Properties of Positive Electrode Active**

**Material Layer**

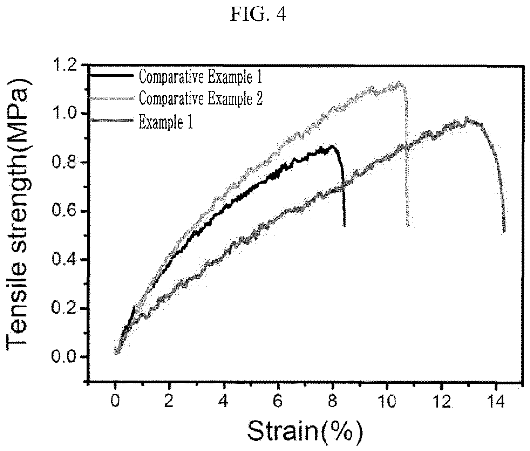

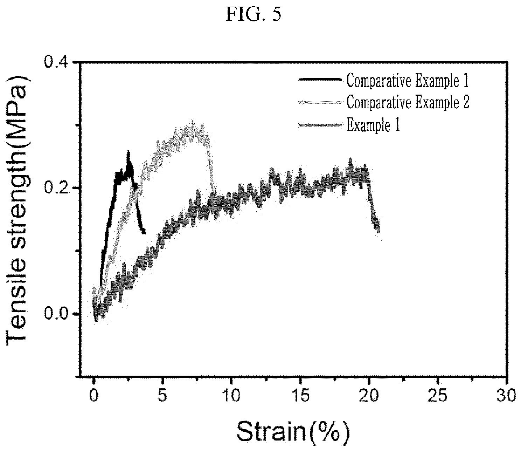

Each of the positive electrodes of Example 1 and Comparative Examples 1 and 2 having an initial thickness of 170 $\mu$m was measured with respect to a tensile strength and an elongation rate by using a Shimadzu Autograph AGS-J device according to ASTM D638, and the results are shown in FIG. 4 (a horizontal direction) and FIG. 5 (a vertical direction).

Referring to FIGS. 4-5, regardless of the horizontal and vertical directions, the tensile strength and the elongation rate were improved in Example 1, compared with Comparative Example 1.

**Evaluation Example 3: Resistivity of Surface of Positive Electrode Active Material Layer**

Each of the sheet-shaped positive electrodes of Examples 1 to 5 and Comparative Examples 1 and 2 was cut into a size of width*length =3 cm*10 cm to prepare a sample. An electrical conductivity measurement device using a 4-point probe was used to measure a current by applying a voltage of 10 V at 47 to 63 Hz to the surface of a positive electrode active material layer of the sample, and the current was used to calculate electrical resistance. This calculated electrical resistance was inserted with a vertical length and a cross-sectional area of the sample into Equation 1 to convert it to electrical resistivity. The results are shown in Table 1.

[Equation 1]

$$R = \rho \, l/S$$

In Equation 1,
$\rho$ = electrical resistance, l = length of sample, and S = cross-sectional area of sample.

**Table 1**

|  | Resistivity of a surface of the positive electrode active material layer (*$10^4$ $\Omega$/sq) |
|---|---|
| Comparative Example 1 (P-cathode) | 0.8 |
| Comparative Example 2 (G-cathode) | 0.46 |
| Example 1 (AG-cathode 1) | 0.56 |
| Example 2 (AG-cathode 2) | 0.58 |
| Example 3 (AG-cathode 3) | 0.6 |
| Example 4 (AG-cathode 4) | 0.68 |
| Example 5 (AG-cathode 5) | 0.54 |

Referring to Table 1, compared with Comparative Example 1, in Examples 1 to 5, resistivity of the surface of the positive electrode active material layer decreased. In Examples 1 to 5, the smaller content of the coating layer in the first conductive material, the lower resistivity of the surface of the positive electrode active material layer, and the more first conductive material than the second conductive material, the lower resistivity of the surface of the positive electrode active material layer.

**Evaluation Example 4: Initial Charge/discharge Efficiency of Rechargeable Lithium Battery Cell**

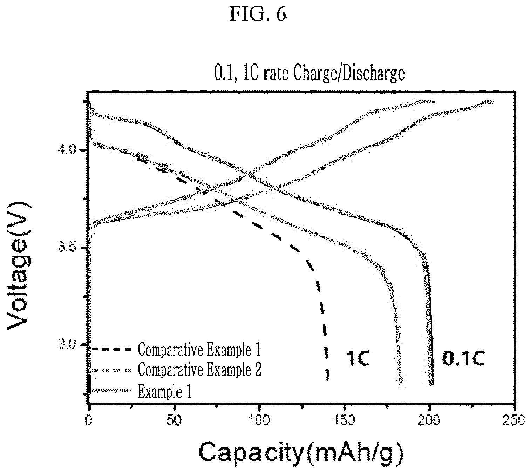

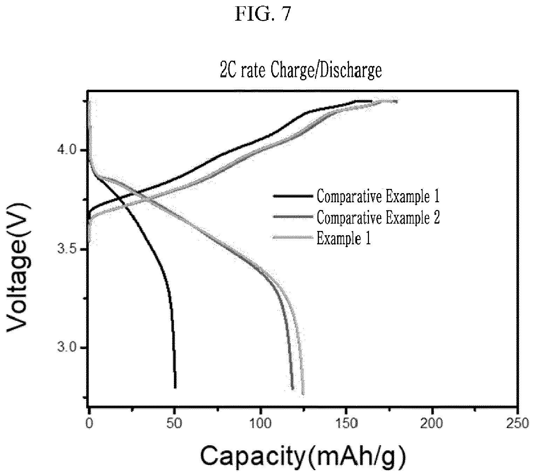

Each of the coin half-cell type rechargeable lithium battery cells of Examples 1 to 5 and Comparative Examples 1 and 2 was constant current-charged to a voltage of 4.25 V (vs. Li) at a current rate of 0.1 C and subsequently, cut off at a current rate of 0.05 C in a constant voltage mode of 4.25 V at 25 °C. Subsequently, the cells were discharged to a voltage of 2.8 V (vs. Li) at a constant current rate of 0.1 C (formation cycle).
The rechargeable lithium battery cells through the formation cycle were constant current-charged to a voltage of 4.4 V (vs. Li) at each current rate of 0.1 C, 1 C, or 2 C and subsequently, cut off at a current rate of 0.05 C in a constant voltage mode of 4.4 V. Subsequently, the cells were discharged to a voltage of 2.8 V (vs. Li) at each constant current rate of 0.1 C, 1 C, or 2 C (1st cycle). Initial charge and discharge efficiency of each of the rechargeable lithium battery cells of Examples 1 to 5 and Comparative Examples 1 and 2 was calculated according to Equation 2, and the results are shown in Table 2. Charge/discharge behaviors of the rechargeable lithium battery cells of Example 1 and Comparative Examples 1 and 2 are representatively shown in FIGS. 6-7.

[Equation 2]

$$\text{Efficiency (\%)} = (1^{st} \text{ discharge capacity}/1^{st} \text{ charge capacity})*100$$

**Table 2**

| | Charge and discharge efficiency (%) | | |
|---|---|---|---|
| | 0.1 C | 1 C | 2C |
| Comparative Example 1 (P-cathode) | 85.4 | 69.3 | 30.6 |
| Comparative Example 2 (G-cathode) | 85 | 91 | 66.1 |
| Example 1 (AG-cathode 1) | 85.2 | 90.7 | 71 |
| Example 2 (AG-cathode 2) | 85.1 | 88.76 | 70 |
| Example 3 (AG-cathode 3) | 85.03 | 85.3 | 64.5 |
| Example 4 (AG-cathode 4) | 85.23 | 76.64 | 48.01 |
| Example 5 (AG-cathode 5) | 84.9 | 88.35 | 67.38 |

Referring to Table 2 and FIGS. 6-7, Examples 1 to 5, compared with Comparative Examples 1 and 2, exhibited improved charge/discharge behaviors at the same C-rate. As the C-rate was increased, the charge/discharge behaviors of Examples 1 to 5 were more improved.

In Examples 1 to 5, the smaller content of the coating layer in the first conductive material, the more improved charge/discharge behaviors, and the more first conductive material than the second conductive material, the more improved charge/discharge behaviors became.

**Evaluation Example 5:**

Each of the pouch-type rechargeable lithium battery cells of Example 1 and Comparative Examples 1 and 2 was aged at room temperature for 40 hours to measure ion transfer resistance ($R_{ion}$).

Independently, each of the rechargeable lithium battery coin half cells of Example 1 and Comparative Examples 1 and 2 was charged to SOC 50% at a rate of 0.1 C after formation at the same C-rate. Subsequently, each of the coin half cells of Example 1 and Comparative Examples 1 and 2 was disassembled to obtain its positive electrode charged to SOC 50%, and the two obtained positive electrodes were used to manufacture a rechargeable lithium battery symmetric coin cell in the same manner as in Example 1, which was aged at room temperature for 24 hours to measure charge transfer resistance ($R_{ct}$).

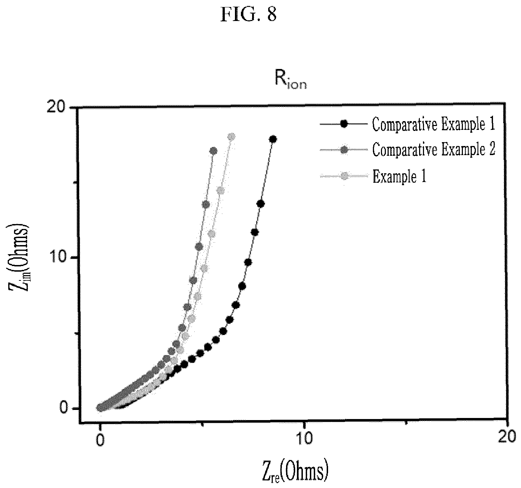

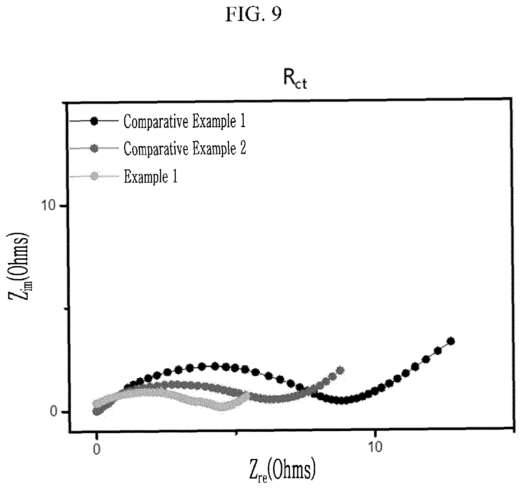

These $R_{ion}$ and $R_{ct}$ are shown in Table 3 and FIGS. 8 and 9.

**Table 3**

| | $R_{ion}$ | $R_{ct}$ |
|---|---|---|
| Comparative Example 1 (P-cathode) | 15.185 | 13.74 |
| Comparative Example 2 (G-cathode) | 8.78 | 9.82 |
| Example 1 (AG-cathode 1) | 9.33 | 6.62 |

Referring to Table 3 and FIGS. 8-9, compared with Comparative Example 1, Example 1 exhibited improved $R_{ion}$, and compared with Comparative Examples 1 and 2, Example 1 exhibited improved $R_{ct}$.

While the subject matter of this disclosure has been described in connection with what is presently considered to be practical example embodiments, it is to be understood that the present disclosure is not limited to the disclosed embodiments, but, on the contrary, is intended to cover various modifications and equivalent arrangements included within the scope of the appended claims, and equivalents thereof.

**Claims**

1. An electrode for a rechargeable lithium battery, comprising:

   a current collector; and
   an electrode active material layer on the current collector and comprising an active material, a first conductive material, and a binder,
wherein the first conductive material comprises:

a core comprising graphene, graphene oxide, reduced graphene oxide, or a combination thereof; and
a coating layer on a surface of the core and comprising alumina nanoparticles.

2. The electrode as claimed in claim 1, wherein:
the coating layer is in a form of dots.

3. The electrode as claimed in claim 1 or claim 2, wherein:

the electrode active material layer further comprises a second conductive material, and
the second conductive material comprises carbon black.

4. The electrode as claimed in claim 3, wherein:
a weight ratio of the first conductive material and the second conductive material is about 1:9 to about 9:1.

5. The electrode as claimed in any one of claims 1 to 4, wherein:
the binder comprises polytetrafluoroethylene, polyvinylidene fluoride, a polyvinylidene fluoride-hexafluoropropylene copolymer, polyethylene oxide, or a combination thereof.

6. The electrode as claimed in any one of claims 1 to 5, wherein:
the active material comprises lithium nickel-based oxide.

7. The electrode as claimed in any one of claims 1 to 6, wherein:

the active material layer comprises, based on 100 wt% of the active material layer,
about 90 wt% to about 99.5 wt% of the active material,
about 0.5 wt% to about 5 wt% of the first conductive material, and
about 0.5 wt% to about 5 wt% of the binder.

8. The electrode as claimed in any one of claims 1 to 7, wherein:
the electrode is a positive electrode.

9. A rechargeable lithium battery comprising the electrode as claimed in any one of claims 1 to 8.

FIG. 1

FIG. 2

1μm

FIG. 3

FIG. 4

FIG. 5

FIG. 6

0.1, 1C rate Charge/Discharge

FIG. 7

2C rate Charge/Discharge

FIG. 8

FIG. 9

R<sub>ct</sub>

Europäisches
Patentamt

European
Patent Office

Office européen
des brevets

# EUROPEAN SEARCH REPORT

Application Number

EP 24 17 8869

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 151 742 A (UNIV FUJIAN) 29 December 2020 (2020-12-29) * abstract * * example 2 * * figure 1 * | 1-9 | INV. H01M4/131 H01M4/525 H01M4/62 H01M10/0525 |
| X | CN 111 470 547 A (GUANGDONG MORION NANOTECH CO LTD) 31 July 2020 (2020-07-31) * abstract * * paragraph [0004] * * example 1 * * figures 1, 2 * | 1,2,6,8, 9 | |
| X | CN 108 365 209 A (CHANGSHA XIAOXIN NEW ENERGY TECH CO LTD) 3 August 2018 (2018-08-03) * abstract * * example 2 * | 1,2,9 | |
| A | CN 109 119 634 A (WUXI TAIKE NANOMETER NEW MAT CO LTD) 1 January 2019 (2019-01-01) * abstract * | 1-9 | TECHNICAL FIELDS SEARCHED (IPC) H01M |

The present search report has been drawn up for all claims

| Place of search | Date of completion of the search | Examiner |
|---|---|---|
| The Hague | 11 October 2024 | Rosciano, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 8869

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2024

| Patent document cited in search report | | Publication date | Patent family member(s) | Publication date |
|---|---|---|---|---|
| CN 112151742 | A | 29-12-2020 | NONE | |
| CN 111470547 | A | 31-07-2020 | NONE | |
| CN 108365209 | A | 03-08-2018 | NONE | |
| CN 109119634 | A | 01-01-2019 | NONE | |

EPO FORM P0459

For more details about this annex : see Official Journal of the European Patent Office, No. 12/82